# EUROPÄISCHE PATENTSCHRIFT

(11) **EP 2 929 175 B1**
(45) Veröffentlichungstag und Bekanntmachung des Hinweises auf die Patenterteilung: **02.11.2016**
(21) Anmeldenummer: 13786637.2
(22) Anmeldetag: 18.10.2013
(51) Int. Cl.: F03B 3/12

(54) **SCHAUFELBLATT FÜR EINE WASSERTURBINE**
BLADE FOR A WATER TURBINE
CORPS D'AUBE POUR TURBINE HYDRAULIQUE

(30) Priorität: 04.12.2012 DE 102012023617
(43) Veröffentlichungstag der Anmeldung: 14.10.2015
(73) Patentinhaber: Voith Patent GmbH, 89522 Heidenheim (DE)
(72) Erfinder: REH, Ingrid, 55595 Spabrücken (DE); HORN, Günther, 89522 Heidenheim (DE)
(74) Vertreter: Dr. Weitzel & Partner
(86) Internationale Anmeldenummer: PCT/EP2013/071860
(87) Internationale Veröffentlichungsnummer: WO 2014/086528

(56) Entgegenhaltungen:
- EP-A1- 0 764 764
- EP-A2- 1 980 714
- CH-A- 162 549
- US-A1- 2004 096 331

## Beschreibung

Die Erfindung betrifft Wasserturbinen, insbesondere axiale Wasserturbinen, zum Beispiel Kaplanturbinen. Siehe beispielsweise DE 101 00 983 A1.

Weitere Beispiele für Turbinen in EP 198 07 14 A2 und DE 198 03 589 A1.

Eine solche Turbine weist als wesentliche Teile ein Laufrad, ein Leitrad sowie ein Gehäuse auf. Das Laufrad umfasst eine Welle sowie eine Anzahl von Schaufelblättern, die von der Welle getragen sind und mit dieser umlaufen. Die Schaufelblätter sind im Allgemeinen um Drehachsen verstellbar, die senkrecht zur Längachse der Welle verlaufen.

Das Verstellen der Schaufelblätter dient dazu, den Wirkungsgrad der Turbine zu optimieren, und zwar über den gesamten Arbeitsbereich hinweg. Außerdem wird bei entsprechendem Verstellen die Kavitation verringert oder vermieden.

Die Kavitation stellt von jeher ein schwerwiegendes Problem dar. Sie tritt an Stellen auf, an denen der statische Druck der Strömung sinkt, während die Strömungsgeschwindigkeit steigt. Dies ist beispielsweise im Fußbereich eines Schaufelblattes der Fall, wo die sogenannte Kerbspannung auftritt.

Zur Vermeidung der Kerbspannung ist es bekannt, eine Kerbe im Material vorzusehen, somit eine Aussparung, welche scharfe Konturänderungen vermeidet und stattdessen sanfte Übergänge der Kontur schafft.

Schaufelblätter für Wasserturbinen bestehen aus gegossenem Stahl. Sie sind somit massiv. Mit dem Ausschneiden einer Entlastungskerbe ist zwar die Gefahr der hohen Kerbspannung wenigstens weitgehend beseitigt. Der die Kerbe bildende Hohlraum ist jedoch nachteilig, da er zu Störungen der Strömung und damit zu einer Verminderung des Wirkungsgrades der Turbine führt. Deshalb füllt man die Kerbe mit einer Füllmasse aus. Sodann wird die Oberfläche der Füllmasse bearbeitet und poliert. Hierdurch wird die alte Kontur des Schaufelblattes wieder hergestellt, das heißt die Kontur vor dem Herausschneiden der Entlastungskerbe.

Somit ist folgendes erreicht: Die nachteiligen Wirkungen der Kerbe, nämlich die Kerbspannung, ist vermieden, und das Schaufelblatt wird auch im Kerbbereich umströmt, als wäre die Entlastungskerbe gar nicht vorhanden.
Hierbei hat sich jedoch ein weiteres Problem ergeben: Das Fixieren der Füllmasse in der Kerbe ist mit Aufwand verbunden, und außerdem nicht zuverlässig. Es besteht nämlich die Gefahr, dass die Füllmasse während des Betriebes aus der Kerbe herausfällt, entweder ganz, oder teilweise, insbesondere im Auslaufbereich der Füllmasse, wo die Schichtdicke gering ist.

Der Erfindung liegt die Aufgabe zugrunde, ein Schaufelblatt für eine Wasserturbine gemäß dem Oberbegriff von Anspruch 1 derart zu gestalten, dass beim Herstellen einer Entlastungskerbe die Füllmasse zuverlässig und dauerhaft und ohne Beeinträchtigung der Strömung fixiert werden kann.

Diese Aufgabe wird durch die Merkmale der selbständigen Ansprüche gelöst.

Die wichtigsten Merkmale sind die folgenden:
- Die Kerbfläche wird mit Haltekörpern versehen, die in montiertem Zustand in der Füllmasse eingebettet sind;
- die Haltekörper weisen Vorsprünge auf, die bei ausgehärteter Füllmasse einem Herausfallen der Füllmasse widerstehen.

Die Haltekörper sind am besten Stifte oder Bolzen oder Schrauben. Diese werden mit der Kerbfläche des Schaufelblattes fest verbunden, zum Beispiel durch Verschweißen. Schrauben sind insofern ideal, als sie keiner weiteren Bearbeitung mehr bedürfen. Durch die Gewinde und Schraubenköpfe findet ein Verkrallen mit der Füllmasse statt.

Auch könnten stiftförmige Haltekörper vorgesehen werden, die abgekröpft sind. Eine weitere Lösung besteht darin, zwei oder mehrerer stiftförmige Haltekörper derart anzuordnen, dass sie aufgrund unterschiedlicher Ausrichtung ihrer Längsachsen einem Herausfallen der Füllmasse widerstehen.

Der Stand der Technik sowie die Erfindung sind anhand der Zeichnung näher erläutert. Darin ist im Einzelnen folgendes dargestellt:
- Figur 1: zeigt eine bekannte Kaplanturbine mit verstellbaren Schaufeln im Aufriss und teilweise im Schnitt.
- Figur 2: zeigt in schematischer Darstellung ein Schaufelblatt in Draufsicht mit Schaufelfuß und nicht-ausgefüllten Entlastungskerben.
- Figur 3: zeigt wiederum gemäß dem Stand der Technik ein Schaufelblatt mit Schaufelfuß und ausgefüllter Entlastungskerbe.
- Figur 4: zeigt eine Ausführungsform gemäß der Erfindung mit Schaufelblatt, Schaufelfuß, Füllmasse und Schrauben des Haltekörpers.
- Figur 5: zeigt in einer 3D-Ansicht eine Kerbfläche gemäß der Erfindung mit Haltekörpern.

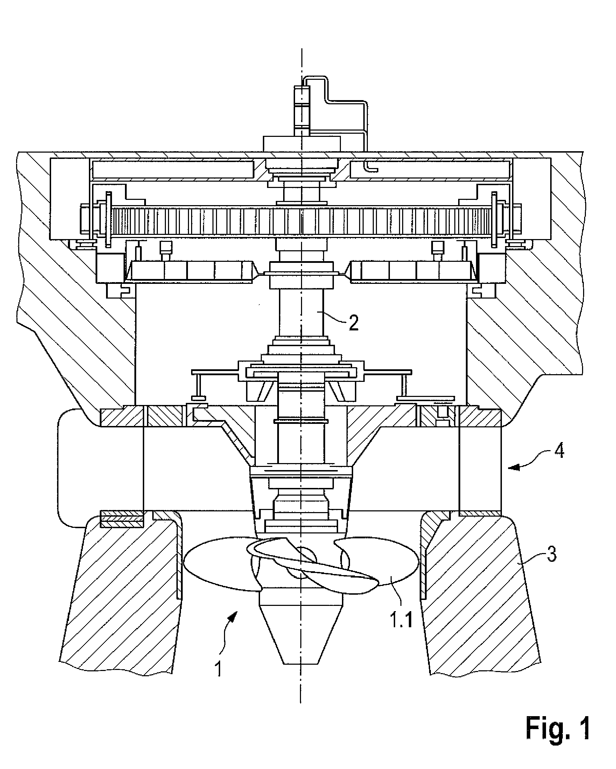

Die in Figur 1 gezeigte Kaplanturbine weist ein Laufrad 1 auf, das von einer Welle 2 getragen ist. Die Welle 2 ist vertikal angeordnet. Das Laufrad weist verstellbare Schaufelblätter 1.1 auf.

Das Laufrad ist von einer stromführenden Wandung 3 umschlossen. Es ist ferner ein Leitschaufelkranz 4 vorgesehen. Dieser ist in der Wandung 3 gelagert. Die Leitschaufeln 4.1 sind ebenfalls verstellbar.

Zum Verstellen dient eine erfindungsgemäße Verstelleinheit, bei welcher eine Verstellkraft aufgebracht wird, die proportional zur Fallhöhe ist.

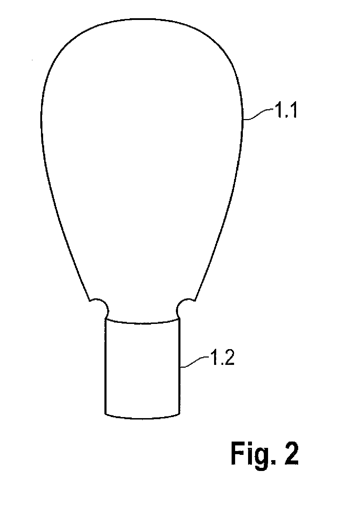

Aus Figur 2 erkennt man ein konventionelles Schaufelblatt 1.1 einer Kaplanturbine mit Schaufelfuß 1.2. Im Fußbereich weist das Schaufelblatt 1.1 zwei Entlastungskerben 5 auf. Diese sind noch nicht ausgefüllt mit Füllmasse.

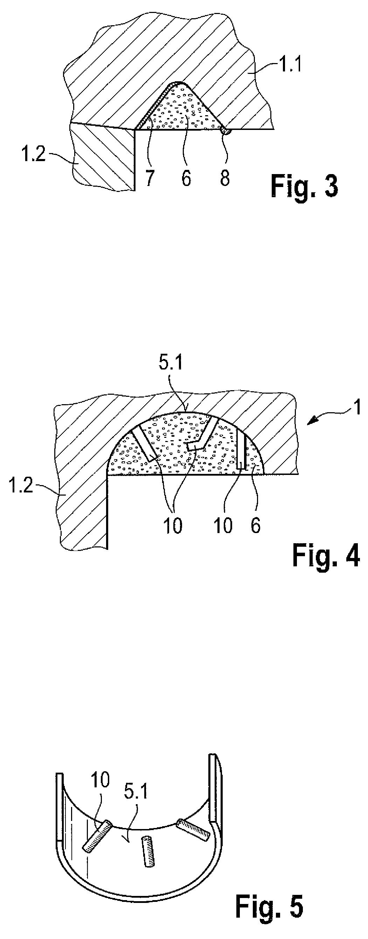

Figur 3 veranschaulicht eine bekannte Ausführungsform mit einem Laufschaufelblatt 1.1, einem Laufschaufelfuß 1.2 und mit einer Füllmasse 6. Die Füllmasse 6 ist mit dem Grund der Entlastungskerbe 5 durch eine Epoxydharzschicht 7 verklebt und außerdem nochmals mit dem Schaufelblatt 1.1 verschweißt - siehe Schweißnaht 8.

Figur 4 ist eine sehr schematische Darstellung eines erfindungsgemäßen Schaufelfußes 1.1 mit Schaufelblatt 1.2, Füllmaterial 6 und Haltekörpern 10. Die Füllmasse 6 besteht aus einem aushärtbaren Material, beispielsweise einem Zweikomponentenkleber oder einem Polymermaterial. Sie enthält außerdem ein Fasergewirr, beispielsweise aus Metallfäden.

Figur 4 zeigt die Kerbfläche 5.1. Diese stellt in dieser Ansicht ein Kreissegment dar. Bezogen auf das Schaufelblatt 1.2 ist sie ringförmig. Die Haltekörper sind im vorliegenden Falle Schrauben 10. Sie sind mit ihrem einen Ende an der Kerbfläche 5.1 angeschweißt.

In montiertem Zustand ragen die Schrauben 10 in die Füllmasse 6 hinein, sind in dieser völlig eingebettet und verkrallen sich mit dem Fasergewirr, sodass die Füllmasse nach Aushärten der Füllmasse zuverlässig fixiert ist.

Die Schrauben sind unter verschiedenen Winkeln ausgerichtet, und zwar im Hinblick darauf, dass sie gemeinsam einem Herausziehen der Füllmasse 6 widerstehen.

### Bezugszeichenliste

- 1: Laufrad
- 1.1: Schaufelblatt
- 1.2: Schaufelfuß
- 2: Welle
- 3: Wandung
- 4: Leitschaufelkranz
- 4.1: Leitschaufelblatt
- 5: Entlastungskerbe
- 5.1: Kerbfläche
- 6: Füllmasse
- 7: Epoxyharzschicht
- 8: Schweißnaht
- 10: Haltekörper

## Patentansprüche

1. Schaufelblatt (1.1) einer Wasserturbine, umfassend die folgenden Merkmale beziehungsweise Bauteile:
1.1 einen Körper aus Stahlblech oder aus Stahlguss, der im Betrieb wasserberührte, einander gegenüberliegende Außenflächen aufweist;
1.2 wenigstens eine Entlastungskerbe (5), die sich in einem Randbereich des Schaufelblattes (1.1) befindet und die sich durch einander gegenüberliegende Bereiche der Außenflächen hindurch erstreckt;
1.3 eine aushärtbare Füllmasse (6), die den Hohlraum der Kerbe (5) ausfüllt;
**gekennzeichnet durch** die folgenden Merkmale:
1.4 an der Kerbfläche (5.1) sind Haltekörper (10) fixiert, die in montiertem Zustand in der Füllmasse (6) eingebettet sind;
1.5 die Haltekörper (10) weisen Vorsprünge auf, die bei ausgehärteter Füllmasse ein Herausfallen der Füllmasse (6) verhindern.

2. Schaufelblatt (1.1) nach Anspruch 1, **dadurch gekennzeichnet, dass** in die Füllmasse (6) ein Fasergewirr eingebettet ist.

3. Schaufelblatt (1.1) nach Anspruch 1 oder 2, **dadurch gekennzeichnet, dass** die Haltekörper (10) aus Schrauben bestehen.

4. Schaufelblatt (1.1) nach einem der Ansprüche 1 bis 3, **dadurch gekennzeichnet, dass** die Haltekörper stiftförmig und abgekröpft sind.

5. Schaufelblatt (1.1) nach einem der Ansprüche 1 bis 4, **dadurch gekennzeichnet, dass** die Füllmasse (6) ein Kunststoff, beispielsweise ein Zweikomponentenkleber oder ein Polymer ist.

## Claims

1. A blade (1.1) for a water turbine, the blade comprising the following features and components:
1.1 a body made of sheet steel or of cast steel, said body having mutually opposite outer faces with which the water makes contact during operation;
1.2 at least one relief notch (5) which is located in an edge region of the blade (1.1) and extends through mutually opposite regions of the outer faces;
1.3 a curable filling compound (6) which fills the cavity of the notch (5);
**characterized by** the following features:
1.4 retaining bodies (10) are fixed to the notch face (5.1), said retaining bodies being embedded in the filling compound (6) in the mounted state;
1.5 the retaining bodies (10) have protrusions which prevent the filling compound (6) from falling out once the filling compound has cured.

2. The blade (1.1) according to claim 1, **characterized in that** a fibre entanglement is embedded in the filling compound (6).

3. The blade (1.1) according to claim 1 or 2, **characterized in that** the retaining bodies (10) consist of screws.

4. The blade (1.1) according to any of claims 1 to 3, **characterized in that** the retaining bodies are pin-shaped and are bent at an angle.

5. The blade (1.1) according to any of claims 1 to 4, **characterized in that** the filling compound (6) is a synthetic material, for example a two-component adhesive or a polymer.

## Revendications

1. Pale (1.1) d'une turbine à eau comprenant les propriétés ou les composants suivants :
1.1 un corps en tôle d'acier ou en acier fondu qui présente des surfaces extérieures opposées en contact avec l'eau pendant le fonctionnement ;
1.2 au moins une entaille de décharge (5) située dans une zone marginale de la pale (1.1) et s'étendant à travers des zones opposées des surfaces extérieures ;
1.3 un mastic (6) durcissable remplissant le vide de l'entaille (5) ; **caractérisée par** les propriétés suivantes :
1.4 des corps de retenue (10) sont fixés sur la surface de l'entaille (5.1) qui, à l'état monté, sont scellés dans le mastic (6) ;
1.5 les corps de retenue (10) présentent des avancées qui empêchent que du mastic (6) ne chute lorsque ledit mastic est durci.

2. Pale (1.1) selon la revendication 1, **caractérisée en ce que** des fibres enchevêtrées sont scellées dans le mastic (6).

3. Pale (1.1) selon la revendication 1 ou 2, **caractérisée en ce que** les corps de retenue (10) se composent de vis.

4. Pale (1.1) selon l'une des revendications 1 à 3, **caractérisée en ce que** les corps de retenue sont en forme de tige et coudés.

5. Pale (1.1) selon l'une des revendications 1 à 4, **caractérisée en ce que** le mastic (6) est une matière plastique tel qu'une colle bicomposante ou un polymère.
